# EUROPEAN PATENT SPECIFICATION

(11) **EP 1 779 017 B1**
(45) Date of publication and mention of the grant of the patent: **14.01.2009**
(21) Application number: 04748726.9
(22) Date of filing: 09.07.2004
(51) Int. Cl.: F16L 25/00, E21D 11/08

(54) **SYSTEM FOR TRANSFERRING A TENSILE LOAD IN AXIAL DIRECTION BETWEEN CONCRETE PIPES**
SYSTEM ZUR ÜBERTRAGUNG EINER ZUGLAST IN AXIALRICHTUNG ZWISCHEN BETONROHREN
SYSTEME DE TRANSFERT AXIAL D'EFFORTS DE TRACTION ENTRE DES CONDUITES EN BETON

(43) Date of publication of application: 02.05.2007
(73) Proprietor: Innovative Solution Developers BV, 2614 TB Delft (NL)
(72) Inventor: VAN DER SLUIS, Hans, Robbert, NL-2614 TB Delft (NL)
(74) Representative: Blokhuis, Sophia Elisabeth Dionysia
(86) International application number: PCT/NL2004/000500
(87) International publication number: WO 2006/006841

(56) References cited:
- DE-C- 823 579
- US-A- 3 212 797

## Description

The invention pertains to a system for transferring a tensile load in axial direction between a first concrete pipe and a second concrete pipe according to the preamble of claim 1.

The invention also pertains to a concrete pipe for use in such a system and a pipeline in which such a system is used.

US 3,212,797 discloses a concrete pipe joint. The pipes to be connected using the known joint are each provided with an anchoring means, which can be welded to a steel reinforcement cylinder in the concrete pipe or can be cast in the concrete of the pipe. Each of the anchoring means is provided with a flange. Over these flanges, a coupling member that has a generally U-shaped cross-section is applied. The legs of the U-shaped coupling member hold the flanges together when a tensile load is applied to the concrete pipes.

DE 823 579 C discloses another type of concrete pipe joint. When concrete pipes are used in pressurised pipelines that are made of multiple pipes, the pipes near a bend in the pipe system become subjected to a tensile load. When such a tensile load is applied to concrete pipes connected by a pipe joint such as known from US 3,212,797, the anchoring means and the coupling member become subjected to a bending moment which introduces significant bending stresses in the anchoring means and in the part of the concrete pipe close to the anchoring means, as well as in the coupling member. In order to avoid damage due to these bending stresses, the anchoring means, the part of the concrete pipe close to the anchoring means and the coupling member need to be of relatively heavy design.

The object of the invention is to provide a system for transferring a tensile load in axial direction between a first concrete pipe and a second concrete pipe in which a leaner design can be used than in known systems.

This object is achieved by a system according to claim 1.

Bending moments in systems of the present type can occur due to offsets in the load transfer path of the axial load, or due to external causes such as soil settlement. Bending stresses in the system due to these bending moments can be reduced by providing a resilient member which is able to deform in response to a bending moment that is applied to it. As the resilient member has a stiffness that is significantly lower than the stiffness of other parts of the system, deformation will occur in the resilient member. Due to this deformation, the other parts of the system (such as the anchoring means of both concrete pipes) can deform or move relative to each other without significant bending stresses being introduced.

As an additional advantage, the use of resilient members makes that the part of a buried pipeline in which the system is used will respond to deformation of the soil (such as due to settlement or loads introduced by traffic) as an articulate body instead of as a rigid beam. So, the pipeline in which the system according to the invention is applied will be more capable of following deformation of the soil. As a result thereof, the forces that occur in the pipeline due to deformation of the soil are significantly lower than in pipelines using known coupling systems.

By arranging the resilient member in the load transfer path (that is: the path the load follows from one concrete pipe to the other concrete pipe), the deformation capability of the resilient member is used in the most efficient way.

Preferably, a plurality of coupling means are provided which are spaced apart over the circumference of the pipe. This facilitates the assembly of the system and increases the ability of the system to overcome misalignments, deformations and other disturbances.

Preferably, at least one resilient member is provided with a pre-stress, and the level of pre-stress is separately adaptable for each individual coupling means. The resilient members can also be used for providing a pre-stress in the system. When multiple coupling members are used, the pre-stress can be adapted per individual coupling means. This way, the optimal pre-stress per coupling means can be applied.

Preferably, the resilient member is compressed when a tensile load in axial direction is applied to the concrete pipes. This way, the grip on the resilient member is tightened as the load increases.

In a first preferred embodiment, the anchoring means of each concrete pipe comprises a plurality of rods. These rods extend from an axial face of the respective concrete pipe in a substantially axial direction. The axial faces of the first and the second concrete pipe are facing each other in use in such a manner that each rod of the first concrete pipe extends substantially alongside of a rod of the second concrete pipe. Thus, when mounted the distance between the axial face of the first concrete pipe and the axial face of the second concrete pipe is smaller than the added lengths of a single rod of the first concrete pipe and of a single rod of the second concrete pipe.

The rods can be connected to axial reinforcement means that are embedded in the concrete, but preferably they are directly cast in the concrete of the pipe. This allows for cheap manufacturing of the pipes.

In this first preferred embodiment, the coupling means comprises a plurality of plates. The number of plates is equal to the total number of rods on the first and the second concrete pipe together. In use, each rod is provided with a plate. Each of the plates has a first hole for receiving an associated rod of one of the concrete pipes. A locking member is provided for each plate-rod combination, for locking each plate to its associated rod.

The plates are dimensioned such that when mounted each plate at least partially overlaps with a neighbouring plate that is associated with a rod of the other concrete pipe when viewed in the axial direction of the pipes.

In this first preferred embodiment, the coupling means further comprises a plurality of resilient members, for example artificial or natural rubber blocks. Each of the resilient members is adapted to be clamped between two adjacent plates (that is: a plate and its neighbouring plate), thereby spacing the adjacent plates in the axial direction of the concrete pipes.

As each rod of the first concrete pipe extends substantially alongside of a rod of the second concrete pipe, the plates can be locked on the rods in such a way that the plate of the rod of the first concrete pipe is arranged closer to the axial face of the second concrete pipe than the plate that is locked onto a rod of the second concrete pipe. By clamping a resilient member between these plates, a tensile load can be transferred via the rod of the first concrete pipe, the plate associated with that rod, the resilient member and the neighbouring plate to the rod of the second concrete pipe that is associated with the neighbouring plate.

By arranging the neighbouring plates the other way around (that is: the plate of the rod of the first concrete pipe is arranged further from the axial face of the second concrete pipe than the plate that is locked onto a rod of the second concrete pipe), an axial compression force can be transferred.

As the neighbouring rods that co-operate in transferring the load are not co-axial, a bending moment is introduced in the system due to the axial load and the distance between those neighbouring rods. When a tensile load is applied, due to that bending moment, the rods will want to bend away from each other, and the plates will want to bend away from the concrete pipe their associated rod is connected to.

The resilient member has two effects on this: first, as the resilient member has a far lower stiffness than the rods and the plates, it will take up the main part of the deformation. Second, the resilient member allows deformation of the rods and the plates rather then suppressing it. By allowing the deformation of the rods and the plates, the bending stresses in the rods and the plates are reduced.

Also, due to the resilient members, deformation of the soil surrounding the pipeline will introduce lower bending moments than in known pipelines, because the pipeline will respond to these deformations as an articulate body rather than as a rigid beam.

Advantageously, the distance between co-operating neighbouring rods is kept as small as possible. This reduces the bending moment introduced in the system.

Also, when a concrete pipe with axial reinforcement means is used in this system, it is advantageous to arrange the rods at the same radial position as the axial reinforcement means. This also reduces the total bending moment in the system as by doing so an additional bending moment due to the offset between the axial reinforcement means and the rods is avoided.

Advantageously, the resilient members are provided with a hole for receiving the associated rod. By arranging the rod through the hole, the resilient member cannot slip away from the plates between which it is clamped.

The resilient member can be used for pre-stressing. When a tensile load is to be expected, this can be achieved by increasing the clamping force with which the resilient members are clamped between the plates.

In an advantageous embodiment, the rods are provided with threaded ends. This way, nuts can be used as locking means. Apart from providing a simple structural solution for the anchoring means, this also makes pre-stressing easy, as the clamping force can be determined by the tightening torque on the nuts.

Preferably, the locking means are provided with a spherical face, which spherical face is adapted to engage a plate, and wherein the plates are provided with a complementary spherical face for receiving the spherical face of the locking means. This way, the locking of the plate onto the rod does not suffer from any misalignment of the rod and the plate.

The spherical face of the locking means can for example be present on a nut or on a washer.

Preferably, the plates and/or the rods are provided with means that prevent rotation of the plate around its associated rod.

In order to facilitate the assembly process, a plurality of resilient members is interconnected by means of a flexible strap such as a chain or a belt. It is also envisaged that the flexible strap is elastic.

It is envisaged that the plates and the resilient member of a pair of co-operating rods are provided with a second hole, so that the plates and the resilient member are adapted to receive both rods of the pair. Preferably, the hole in the plate that is adapted to receive the rod that is not the associated rod, is sufficiently wide to allow deformation and/or misalignment.

The second hole preferably comprises a slit, which extends to the rim of the plate or the resilient member respectively. This facilitates the mounting of the plates and the resilient members.

So, in the most basic example the first preferred embodiment pairs of rods are applied, one rod of the pair being attached to the first concrete pipe and the other rod of the pair being attached to the second concrete pipe, between which a load is transferred by means of two plates and a resilient member. Although in theory only one pair of rods can be used, in practice more pairs will be used in order to avoid the introduction of moments and asymmetrical loads. The pairs of rods are preferably essentially equally distributed over the circumference of the pipes.

However, in an other example of the first preferred embodiment, resilient members are used that have a central hole for receiving a rod, and extend from both sides of the central hole. The plates also have a central hole and extend from both sides of the central hole.

In this exemplary embodiment, both concrete pipes have the same number of rods, and the rods are arranged at the same pitch on both pipes. When assembling, the pipes are positioned such that the distance between a rod of the first concrete pipe and the neighbouring rod of the second concrete pipe is about half the pitch. Then, resilient members are arranged on the rods of one, for instance the first, concrete pipe, and the plates are arranged on all rods. By doing so, the plates of the first concrete pipe each engage one resilient member, and the plates of the second concrete pipe each engage two resilient members.

This way, the load is distributed over the entire circumference of the pipes.

In a different example, groups of three rods transfer the axial load. The rod in the middle of such a group is connected to one of the concrete pipes (for example the first) and the other two rods are connected to the other concrete pipe (so, in this example the second). A resilient member is mounted to the rod in the middle. The resilient member extends towards both the outer rods of the group.

A first plate is mounted to the rod in the middle, a second and a third plate are mounted to the outer rods. This way, the resilient member is on one side clamped between the first plate and the second plate, and on its other side clamped between the first plate and the third plate.

Although in theory only one group of rods can be used, in practice more groups will be used in order to avoid the introduction of moments and asymmetrical loads. The groups of rods are preferably essentially equally distributed over the circumference of the pipes.

In a second preferred embodiment, the anchoring means on each concrete pipe comprises at least one engaging member that projects from the concrete pipe in radial direction. In this second preferred embodiment, the coupling means comprises at least one first resilient member which is adapted to engage an engaging member of the first concrete pipe, at least one second resilient member which is adapted to engage an engaging member of the second concrete pipe and at least one connecting means for interconnecting a first and a second resilient member in such a manner that an axial load can be transferred from the first concrete pipe to the second concrete pipe.

In this embodiment, bending moments are introduced because the engagement means extend beyond the outside diameter of the pipe. In order to reduce the bending moment, it is advantageous to locate the engagement member as close in radial direction to the point of action of the axial load as possible.

The resilient members have two effects on the reaction of the system to this bending moment: first, as the resilient members have a far lower stiffness than the engagement members and the connecting means, they will take up the main part of the deformation. Second, the resilient members allow deformation of the engagement members and the connecting means rather then suppressing it. By allowing the deformation of engagement members and the connecting means, the bending stresses in the engagement members and the connecting means are reduced.

In parts of concrete pipelines close to bends, generally axially reinforced concrete pipes are used. The reinforcement means usually comprise reinforcement wires, that deflect outwardly at the bell. In the system according to the invention, the anchoring means are preferably fixed in the concrete of the pipe inside the diameter of the pattern of reinforcement wires. By using the form of the bell, and casting the internal bell's volume solid, the concrete section of the bell of a pipe in accordance with the invention can locally bear higher bending moments then the concrete section of a bell of a known pipe.

Preferably, the connecting means is a clamp comprising a first clamping member for engaging an engaging member of the first concrete pipe, a second clamping member for engaging an engaging member of the second concrete pipe and a connector for joining the first and the second clamping member. This provides a simple but effective construction.

Preferably, the first and the second clamping member are provided with teeth for locking the first clamping member and the second clamping member relative to each other. By this, the load that can be transferred is increased.

Preferably, the engagement member of at least one of the concrete pipes is an at least partial circular plate which is attached to an axial face of said concrete pipe. This provides a simple but effective construction.

It is envisaged that a plurality of coupling means is provided, which are distributed over the circumference of the pipes.

In that case, it is also envisaged that a plurality of coupling means is interconnected by means of at least one flexible strap, such as a chain or a belt.

For all embodiments, it is envisaged that at least one concrete pipe comprises sealing means which are attached to the anchoring means.

Systems according to the present invention will be discussed below in more detail under referral to the drawing, which shows exemplary embodiments of the invention is a non-limiting way.

The drawing shows in:
fig. 1 - a longitudinal cross-section of the first preferred embodiment of the system according to the invention,
fig. 2 - a view according to line A-A of fig. 1 of a first example of the first preferred embodiment of the system according to the invention,
fig. 3 - a view according to line A-A of fig. 1 of a second example of the first preferred embodiment of the system according to the invention,
fig. 4 - a variety to the embodiment of fig. 3,
fig. 5 - a view according to line A-A of fig. 1 of a third example of the first preferred embodiment of the system according to the invention,
fig. 6 - a perspective view of a variety of the embodiment of fig. 5,
fig. 7 - a view according to line A-A of fig. 1 of a fourth example of the first preferred embodiment of the system according to the invention,
fig. 8 - a variety to the embodiment of fig. 7,
fig. 9 - a locking means provided with a spherical face,
fig. 10- a longitudinal cross-section of the second preferred embodiment of the system according to the invention,
fig. 11 - examples of engaging members,
fig. 12 - a perspective view of a variety of the embodiment of fig. 10,
fig. 13- a perspective view of the embodiment of fig. 12.

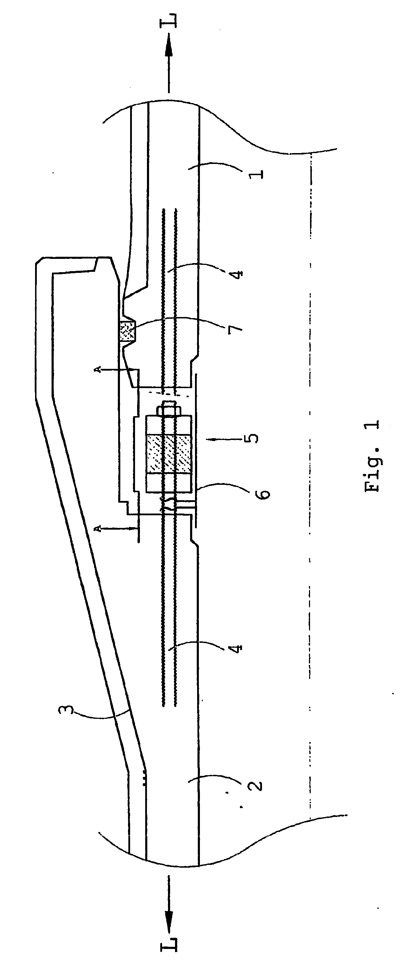

Fig. 1 shows a longitudinal cross-section of the first preferred embodiment of the system according to the invention.

A first concrete pipe 1 and a second concrete pipe 2 are subjected to an axial tensile load L. The concrete pipes 1,2 are in this example regular spigot-bell type pipes, having axial reinforcement wires 3 for pre-stressing the concrete. However, also other types of concrete pipe can be used in the system according to the invention.

Multiple concrete pipes 1,2 can be combined to form a pipeline. Especially near bends in pressurised systems, tensile loads are introduced in the pipeline, which would move the pipes away from each other when a normal spigot-bell connection would be used. In order to be able to transfer the tensile load from one pipe to the other, so that the pipes do not move away from each other, typically pipes provided with a steel cylinder embedded in them were used. By welding the steel cylinders of adjacent pipes together, the tensile load could be transferred. However, concrete pipes 1,2 with a steel cylinder are very expensive and the on site welding can be tricky. As an alternative, clamps as for example known from US 3,212,797 are used, or steel flanges with bolts as known from standard steel pipe couplings.

In the first preferred embodiment of the invention, the axial load L is transferred between the first and the second concrete pipe 1,2 by anchoring means 4. The anchoring means 4 of the first concrete pipe 1 and the anchoring means 4 of the second concrete pipe 2 are connected to each other by coupling means 5.

In the first preferred embodiment, the typical diameter of the concrete pipes 1,2 is about 1800 mm, and the typical pressure is about 6 bar.

In the embodiment shown in fig. 1, the anchoring means 4 and the coupling means 5 are separated from the contents of the pipeline by sealing means 6. In this example, the sealing means 6 comprises a thin plate, which can be fixed to the anchoring means 4, for example by means of a click-fit connection. With the exemplary embodiment of the sealing means 6 shown in fig. 1, a flush interior pipe wall is created. Water tightness however can be obtained by means of additional seal 7.

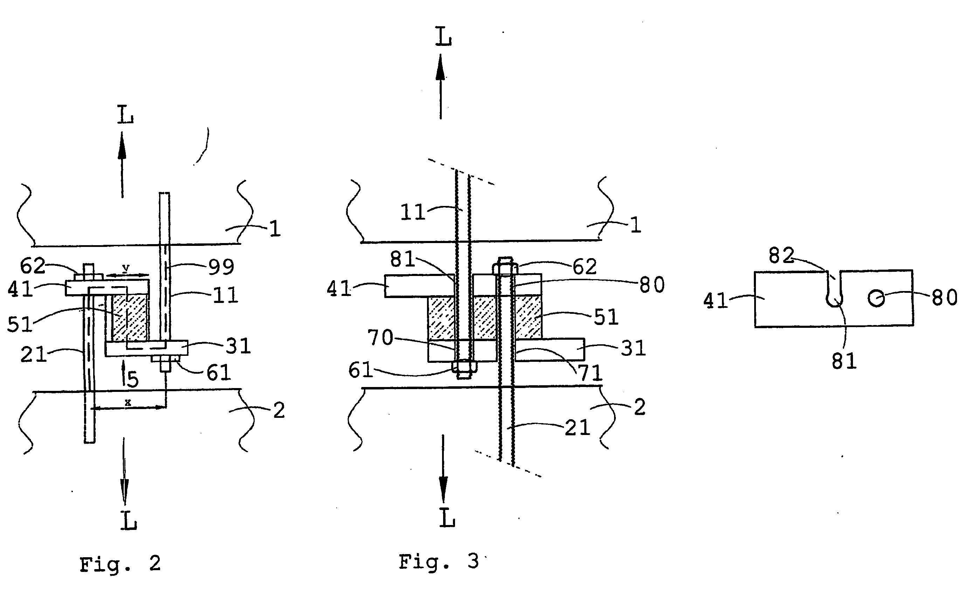

Fig. 2 shows a basic example of the first preferred embodiment of the system according to the invention.

The first concrete pipe 1 is provided with a plurality of rods 11. The rods 11 are cast directly in the concrete of pipe 1. The second concrete pipe 2 is provided with a plurality of rods 21. The rods 21 are cast directly in the concrete of pipe 2. The distance between axial faces of the concrete pipes 1,2 that face each other is such that the rods 11,21 extend alongside of each other.

Onto rod 11, a plate 31 is mounted. The plate 31 is kept on the rod 11 by locking means 61. Likewise, onto rod 21, a plate 41 is mounted. The plate 41 is kept on the rod 21 by locking means 62. As is clear form fig. 2, plates 31, 41 have an overlap y.

Between plates 21 and 41, a resilient member 51 is present. In this example, the resilient member 51 is a rubber or neoprene block.

The load transfer path of load L is indicated in fig. 2 by number 99.

Due to axial load L and distance x, a bending moment is introduced in the coupling means 5. The resilient member 51 reacts to this bending moment in two ways. First, as the resilient member 51 has a far lower stiffness than the rods 11,21 and the plates 31,41, it will take up the main part of the deformation. Second, the resilient member 51 allows deformation and/or relative movement of the rods 11,21 and the plates 31,41.

In order to limit the bending load L in the coupling means 5, the distance x is preferably kept as small as possible.

Apart from bending moments introduced by the axial load L, the resilient members can also transfer forces and moments that have a different origin, such as forces and moments due to misalignment or due to settlements in the soil surrounding the pipeline.

Although it is theoretically possible to transfer load L by means of a single pair of co-operating rods 11,21, it is preferred that multiple pairs of co-operating rods are used for transferring the load L. The other pair of co-operating rods are then coupled in the same way as rods 11,21.

In an alternative embodiment that is not shown in the drawing, the rods 11 are arranged at a different radial position than the rods 21. This way, more pairs of rods can be arranged over the circumference of the pipes.

An additional advantage of the embodiment of fig. 2 in general is that the system can be adjusted and inspected from the inside of the pipeline, so that for adjustment or inspection the pipeline does not have to be dug up.

Fig. 3 shows an alternative example of the first preferred embodiment of the invention.

In the embodiment of fig. 3, the plates 31, 41 are provided with a first hole 70,80 and a second hole 71, 81. The first hole receives the rod that is associated with the plate, so first hole 70 of plate 31 receives rod 11 and first hole 80 of plate 41 receives rod 21.

The second hole is for receiving the other rod of the pair of co-operating rods 11, 21. So, second hole 71 of plate 31 receives rod 21 and second hole 81 of plate 41 receives rod 11.

The second hole is wide enough to allow deformation or misalignment of the rod which is received in the second hole.

In order to allow easy assembly of the coupling means 5, preferably the second hole 71, 81 is provided with a slit 72, 82 through with the rod 21, 11 respectively can pass. It is envisaged that after the plate is mounted on both rods, the slit is closed off again. This way, the torsional stiffness of the plate is less affected by the slit.

In this embodiment, also the resilient member 51 is provided with a first and a second hole. One or both of these holes can be provided with a slit, just like the plates 31,41.

It is in general (so not only in this embodiment) advantageous to provide the resilient member 51 with a hole, because this prevents the resilient member 51 from slipping out of the plates 31,41. As an alternative or in addition, also in all embodiments shown, the plates can be provided with one or more projecting rims that hold the resilient member in place.

As with the embodiment of fig. 2, the embodiment of fig. 3 requires multiple pairs of co-operating rods for a good load transfer.

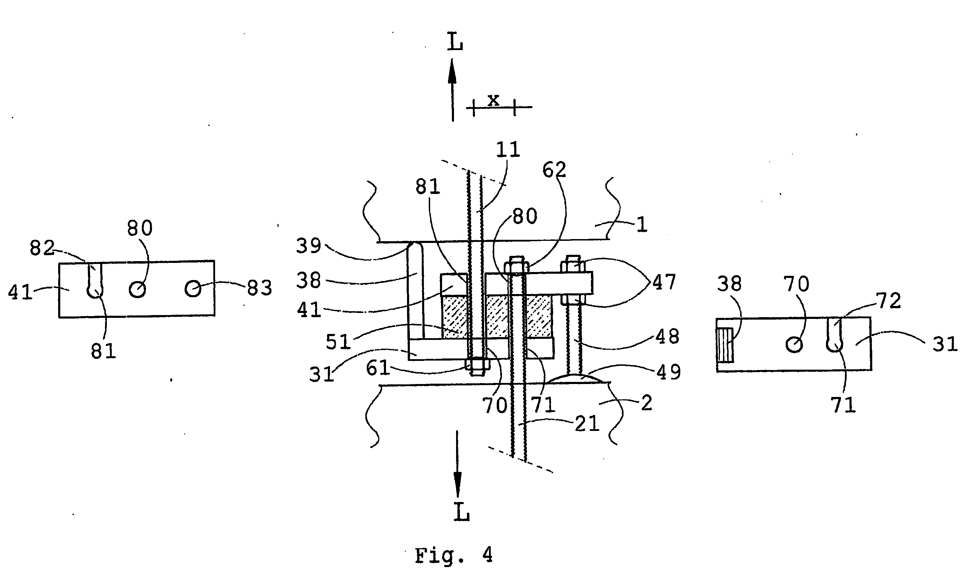

Fig. 4 shows a variety to the embodiment of fig. 3. It is generally advantageous to reduce bending moments on the rods as much as possible. In the embodiment of fig. 4, the embodiment of fig. 3 has been adapted in order to achieve that.

In the embodiment of fig. 4, plate 31 has been provided with an extension plate 38. When load L is applied, extension plate 38 will be subjected to a compression load. Extension plate 38 therewith counteracts the bending moment introduced in rod 11 by load L and distance x between rods 11 and 21.

Extension plate 38 is provided with a rounded tip 39. This allows some tilting of the adjustment plate 38 relative to the concrete pipe 1, without damaging the concrete.

In this embodiment, plate 41 has been provided with hole 83, which hole 83 is adapted to receive adjustment rod 48. Adjustment rod 48 is fixed relative to plate 41 by means of nuts 47, and bear against concrete pipe 2 via a saucer-shaped plate 49. Nuts 47 allow adjustment of the distance between plate 41 and concrete pipe 2.

Adjustment rod 48 counteracts the bending moment introduced in rod 21 by load L and distance x between rods 11 and 21, just like extension plate 38.

It is envisaged that for both plates either extension plates 38 or adjustment rods 48 are used.

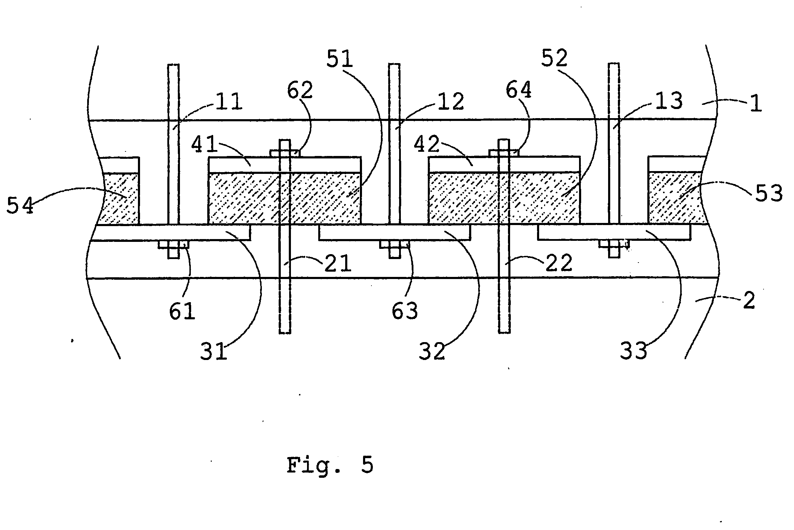

Fig. 5 shows an other alternative example of the first preferred embodiment of the invention. In this embodiment, the bending moment on the rods due to the axial load L is significantly reduced.

In the embodiment of fig. 5, both concrete pipes 1,2 have the same number of rods, and the rods are arranged at the same pitch on both pipes. When assembling, the pipes are positioned such that the distance between a rod of the first concrete pipe 1 and the neighbouring rod of the second concrete pipe 2 is about half the pitch.

Resilient members 51,52,53,54 are arranged on the rods 11,12,13 of one, in this case the first, concrete pipe. Each rod 11,12,13,21,22 is provided with a plate 31,32,33,41,42. Thus, the plates 31,32,33 associated with the rods 11, 12, 13 of the first concrete pipe 1 each engage two resilient members 51, 52, and the plates 41,42 associated with the rods 21,22 of the second concrete pipe 2 each engage one resilient member 54 and 51, 51 and 52, 52 and 53 respectively. This pattern extends around the entire circumference of the pipes.

This way, the resulting bending moment on each rod 11,12,13,21,22 is significantly reduced due to the symmetrically applied load.

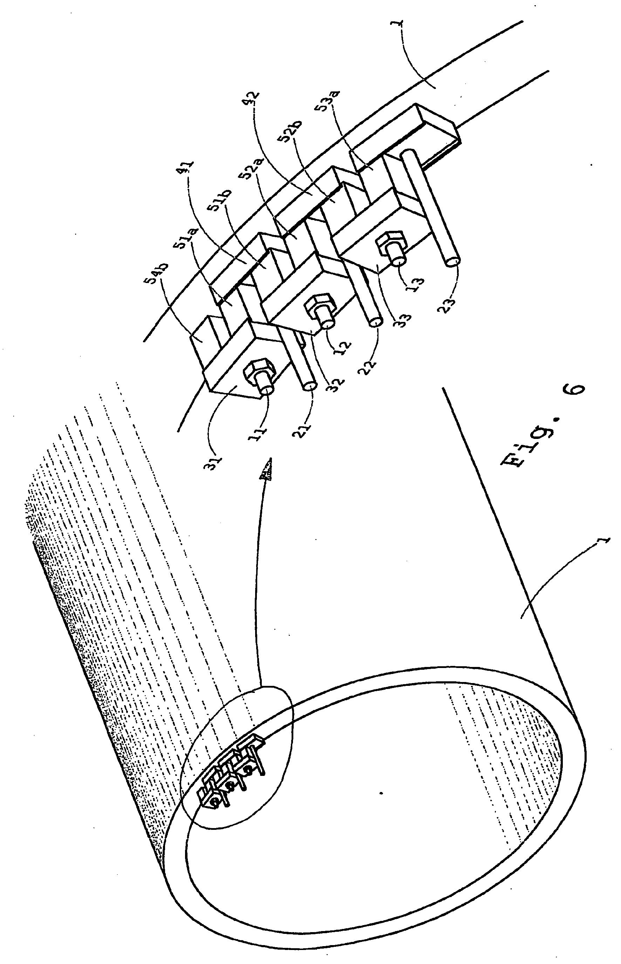

Fig. 6 shows a perspective view of a variety of the embodiment of fig. 5. In this variety, instead of resilient members with a hole, resilient members such as shown in fig. 2 have been used.

Although the system is shown only over a part of the circumference of the concrete pipe 1, the system in this embodiment extends over the entire circumference of the concrete pipes. For reasons of clarity, concrete pipe 2 has been left out in fig. 6.

Fig. 6 clearly indicates the relative spatial orientation of the parts of the system according to the invention.

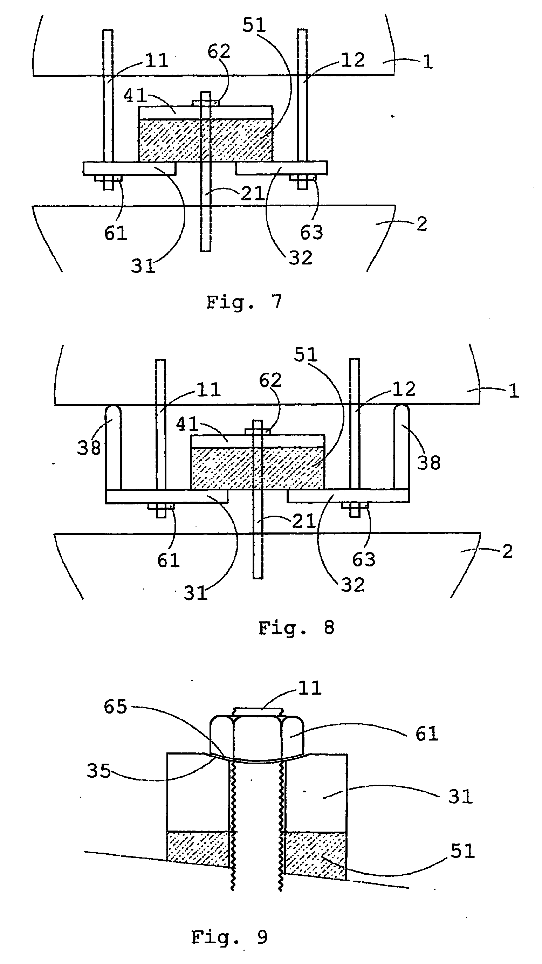

Fig. 7 shows the example of the first preferred embodiment of the invention in which groups of three rods 11,12,21 transfer the axial load L. The rod 21 in the middle of such a group is connected to one of the concrete pipes 1,2 (in this case the second) and the other two rods 11,12 are connected to the other concrete pipe 2,1 (so, in this example the first). A resilient member 51 is mounted to the rod 21 in the middle. The resilient member 51 extends towards both the outer rods 11,12 of the group.

A first plate 41 is mounted to the rod 21 in the middle, a second and a third plate 31,32 are mounted to the outer rods 11,12. This way, the resilient member 51 is on one side clamped between the first plate 41 and the second plate 31, and on its other side clamped between the first plate 41 and the third plate 32.

Although in theory only one group of rods 11,12,21 can be used, in practice more groups will be used in order to avoid the introduction of moments and asymmetrical load Ls. The groups of rods are preferably essentially equally distributed over the circumference of the pipes in order to obtain a uniform distribution of the load.

In all embodiments described above, it is envisaged that multiple resilient members are interconnected by one or more flexible straps, such as chains or belts. More preferably, the straps are elastic, so allow easy assembly of the coupling means 5. Interconnecting the resilient members reduces the number of loose parts that have to be taken inside the pipe when mounting the load transfer system. Likewise, also a plurality of plates can be interconnected.

Fig. 8 shows a variety to the embodiment of fig. 7. In the embodiment of fig. 8, extension plates 38 have been provided on the plates 31 and 32. Extension plates 38 counteract the bending moments on rods 11 and 12.

Fig. 9 shows locking means 61 that are provided with a spherical face 65, which spherical face 65 is adapted to engage a plate 31. In this embodiment, plate 31 is provided with a complementary spherical face 35 for receiving the spherical face 65 of the locking means 61. This way, the locking of the plate 31 onto the rod 11 does not suffer from any misalignment of the rod 11 and the plate 31.

In the example of fig. 9, the locking means 61 is a nut, which engages a threaded end of rod 11. As an alternative, a standard nut can be used in combination with a washer between the nut and the plate, which washer is provided with a spherical face.

Preferably, the plates and/or the rods are provided with means that prevent rotation of each respective plate around its associated rod. This is especially advantageous during the mounting process. This can be achieved for example by providing a projection on the rod, which is received by an additional slot that extends from the hole in the plate that receives the rod.

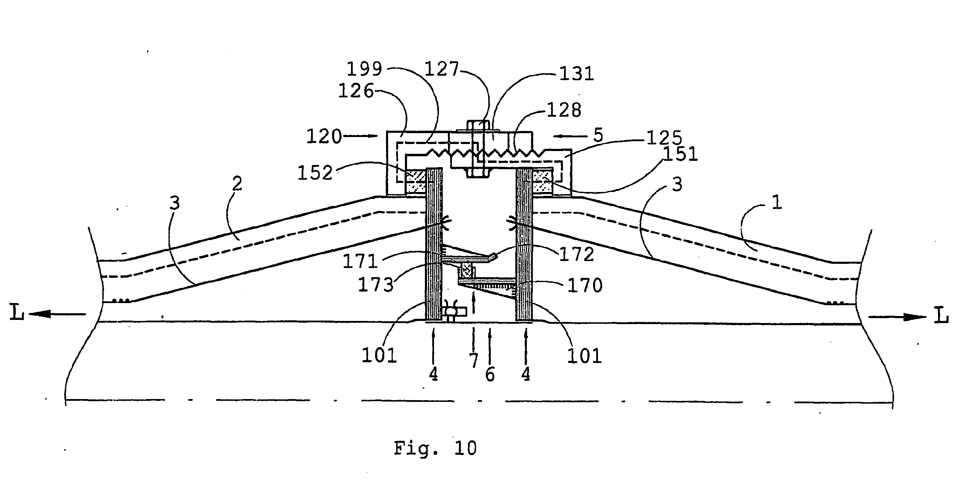

Fig. 10 shows the second preferred embodiment of the system according to the invention.

In the embodiment of fig. 10, the anchoring means 4 on each concrete pipe comprises at least one engaging member 101,102,103,104, 105, 106, 107,108 that projects from the concrete pipe in radial direction. In this embodiment, the coupling means 5 comprises at least one first resilient member 151 which is adapted to engage an engaging member 101,102,103,104, 105, 106, 107,108 of the first concrete pipe 1, at least one second resilient member 152 which is adapted to engage an engaging member 101,102,103,104, 105, 106, 107,108 of the second concrete pipe 2. The coupling means 5 further comprises at least one connecting means 120 for interconnecting a first and a second resilient member 152 , 151 in such a manner that an axial load L can be transferred from the first concrete pipe 1 to the second concrete pipe 2.

In this embodiment, bending moments are introduced because the engagement means extend beyond the outside diameter of the pipe. Also, bending moments can be due to different causes, such as soil settlement.

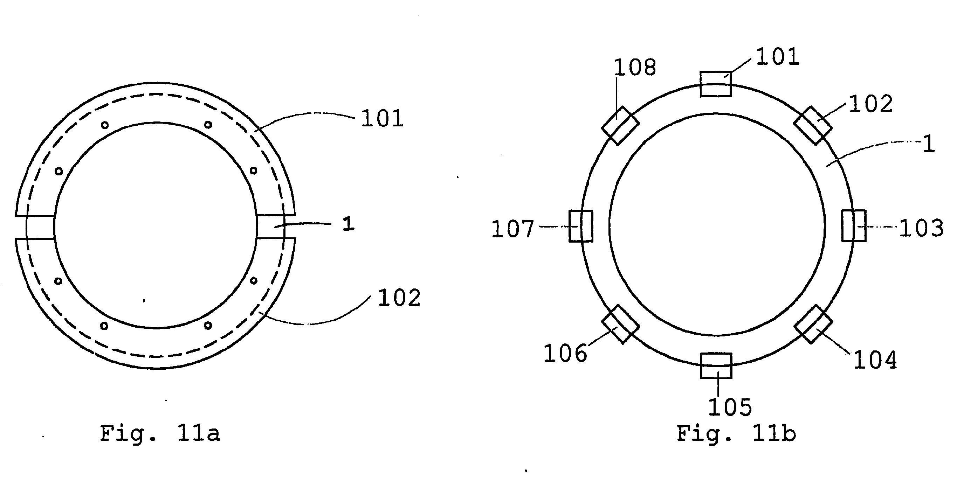

Fig. 11 shows examples of engaging members. In fig. 11a, the engaging members are semicircular plates that are attached to the axial face of a concrete pipe. In fig. 11b, the engaging members are small plates on the axial face of the pipe, that are distributed over the circumference of the pipe.

In the example of fig. 10, the concrete pipes 1,2 used in this system comprise reinforcement means in the form of axial reinforcement wires 3. In the embodiment of fig. 10, at least one engaging member is connected to the reinforcement wires 3.

The load transfer path of load L is indicated in fig. 10 by number 199.

The connecting means 120 is a clamp comprising a first clamping member 125 for engaging an engaging member 101, 102, 103, 104, 105, 106, 107,108 of the first concrete pipe 1, a second clamping member 126 for engaging an engaging member 101,102,103,104, 105, 106, 107,108 of the second concrete pipe 2 and a connector 127 for joining the first and the second clamping member 125,126.

It is advantageous if the connector 127 allows that the first and the second clamping members 125,126 are adjusted with respect to each other. This can for example be achieved by means of a connector 127 such as a bolt, which is received in a slotted hole 131 in the second clamping member 126.

In the embodiment of fig. 10, the first and the second clamping member 125,126 are provided with teeth 128 for locking the first clamping member 125 and the second clamping member 126 relative to each other. This way, the clamping members have an increased grip onto each other.

Preferably, a plurality of coupling means 5 is provided, which are distributed over the circumference of the pipes.

In that case, it is also envisaged that a plurality of coupling means 5 is interconnected by means of at least one flexible strap, such as a chain or a belt. This flexible strap can be attached to the connectors 127, but also to one of the clamping members or to both clamping members.

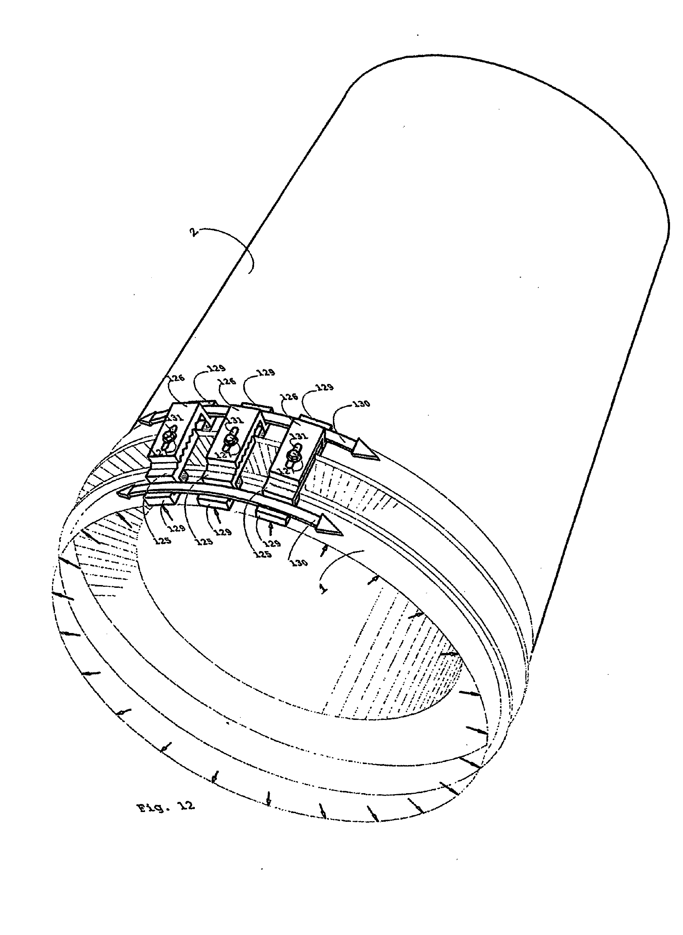

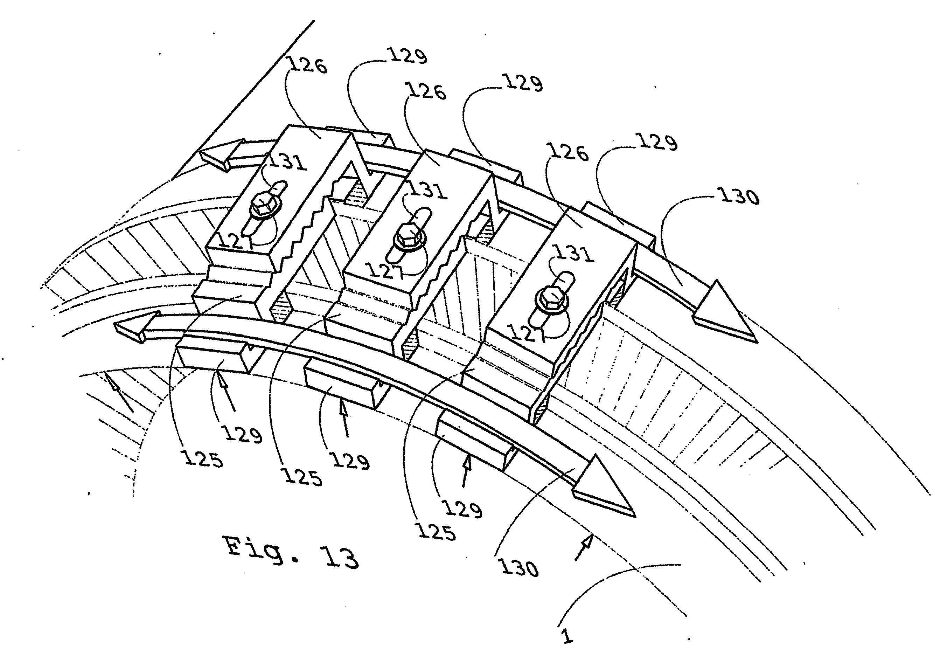

Figures 12 and 13 show a perspective view of a variety of the embodiment of fig. 10. In this variety, the clamping members 125 and 126 have been provided with a projection 129, over which a strap 130 can be applied. This strap 130 presses the clamping members 125,126 against the respective concrete pipe 1,2 onto which they are fixed. This way, the strap 130 counteracts the bending moment on the clamping means due to the axial load L.

In the embodiment of fig. 10, the coupling means 5 are shielded from the contents of the pipeline by means of sealing means 6 and 7.

In this example, the sealing means 6 comprises a thin plate, which can be fixed to a projecting rod on the anchoring means 4, for example by means of a click-fit connection. This results in a flush interior pipe wall.

The sealing means 7 is for water tightness and comprises a first projection 170 and a second projection 171. The projections are each welded to an engaging member in this example. The first projection holds a mechanical seal 173, which can be of any suitable known type. The second projection 171 comprises a locating edge 172, which facilitates the assembly of the sealing means 6 when the first and the second concrete pipe 1,2 are positioned relative to each other. The mechanical seal 173 in use engages both the first and the second projection 170,171.

The second preferred embodiment can be used in combination with pipes having a diameter that does not allow assembly of the system from the interior of the pipe.

## Claims

1. System for transferring a tensile load in axial direction between a first concrete pipe (1) and a second concrete pipe (2), wherein the first concrete pipe (1) comprises at least one first anchoring mean (4), and
wherein the second concrete pipe (2) comprises at least one second anchoring means (4),
the system comprising at least one coupling means (5) for interconnecting a first anchoring means (4) of the first concrete pipe (1) and an associated second anchoring means (4) of the second concrete pipe (2) in such a manner that a tensile load (2) in axial direction can be transferred between the first concrete pipe (1) and the second concrete pipe (2),
**characterised in that**,
the coupling means (5) comprises at least one resilient member (51) which is arranged in the load transfer path (99) between the first (1) and the second (2) concrete pipe, which resilient member (51) is adapted to deform due to a bending moment in the coupling means.

2. System according to claim 1,
wherein a plurality of coupling means (5) are provided which are spaced apart over the circumference of the pipe, and/or
wherein the resilient member (51) is compressed when a tensile load in axial direction is applied to the concrete pipes,
wherein preferably at least one resilient member (51) is provided with a pre-stress, and wherein the level of pre-stress is separately adaptable in each individual coupling means.

3. System according to one of the preceding claims,
wherein the anchoring means (5) of each concrete pipe comprises a plurality of rods (11,21) which rods (11,21) extend from an axial face of the respective concrete pipe in a substantially axial direction, which axial faces of the first (1) and the second (2) concrete pipe are facing each other in use in such a manner that each rod (11) of the first concrete pipe (1) extends substantially alongside of a rod (21) of the second concrete pipe (2).
and wherein the coupling means (5) comprises:
- a plurality of plates (31,41), the number of plates (31,41) being equal to the total number of rods (11,21) on the first (1) and the second (2) concrete pipe together,
each of the plates (31,41) having:
- a first hole for receiving an associated rod (11,21) of one of the concrete pipes (1,2), and
- a length such that, when mounted, each plate (31,41) at least partially overlaps in a direction substantially perpendicular to the axial direction of the pipes (1,2) with a neighbouring plate that is associated with a rod of the other concrete pipe,
- a plurality of resilient members (51), each of the resilient members being adapted to be clamped between two adjacent plates (31,41), thereby spacing the adjacent plates in the axial direction of the concrete pipes,
- a plurality of locking members (61,62), for locking each plate to its associated rod.

4. System according to claim 3,
wherein at least one resilient member (51) is provided with a hole for receiving a rod (11,21), and/or
wherein at least one resilient member (51) is suitable for being clamped between a first plate (41) and a second plate (31), and between the first plate (41), and a third plate (32), the second plate (31) and the third plate (32) neighbouring the first plate (41) on different sides of the first plate (41), and/or
wherein the rods (11,21) are provided with threaded ends and the locking members (61,62) are nuts, and/or
wherein the locking means (61) are provided with a spherical face (65), which spherical face is adapted to engage a plate (31), and wherein the plates (31) are provided with a complementary spherical face (35) for receiving the spherical face (65) of the locking means (61), and/or
wherein the resilient members (51) are blocks of natural or artificial rubber, and/or
wherein a plurality of resilient members (51) is interconnected by means of at least one flexible strap, and/or
wherein at least one plate (31,41) and/or at least one rod (11,21) is provided with means to prevent rotation of the plate around its associated rod.

5. System according to one of the claims 3 or 4,
wherein at least one plate (31,41) is provided with a second hole (71,81) for receiving the rod (11,21) associated with the neighbouring plate,
wherein preferably the second hole (71,81) has a diameter which is substantially larger than the outer diameter of a rod (11,21), or
wherein the second hole (71,81) comprises a slit (82) that extends to the outer rim of the plate (41).

6. System according to one of the claims 3-5,
wherein at least one resilient member (51) is provided with a second hole for receiving the rod associated with the neighbouring plate,
wherein preferably the second hole has a diameter which is substantially larger than the outer diameter of a rod, or
wherein the second hole comprises a slit that extends to the outer rim of the resilient member.

7. System according to one of the claims 1 or 2,
wherein the anchoring means (4) on each concrete pipe (1,2) comprises at least one engaging member (101) that projects from the concrete pipe in radial direction,
and wherein the coupling means (5) comprise:
- at least one first resilient member (151) which is adapted to engage an engaging member (101) of the first concrete pipe (1),
- at least one second resilient member (152) which is adapted to engage an engaging member (101) of the second concrete pipe (2),
- at least one connecting means for interconnecting a first and a second resilient member in such a manner that an axial load can be transferred from the first concrete pipe to the second concrete pipe.

8. System according to claim 7,
wherein at least one concrete pipe (1,2) comprises reinforcement means (3) embedded in the concrete, and wherein at least one engaging member (4) is connected to these reinforcement means (3), and/or
wherein the engagement member of at least one or the concrete pipes (1,2) is an at least partial circular plate which is attached to an axial face of said concrete pipe.

9. System according to claim 7 or 8,
wherein the connecting means is a clamp comprising a first clamping member (125) for engaging an engaging member of the first concrete pipe (1), a second clamping member (126) for engaging an engaging member of the second concrete pipe (2) and a connector (127) for joining the first and the second clamping member (125, 126),
wherein preferably the first (125) and the second clamping member (126) are provided with teeth (128) for locking the first clamping member and the second clamping member relative to each other.

10. System according to one of the claims 7-9,
wherein a plurality of coupling means is provided which are distributed over the circumference of the pipes,
wherein preferably a plurality of coupling means is interconnected by means of at least one flexible strap (130).

11. System according to one of the preceding claims,
wherein at least one concrete pipe comprises sealing means which are attached to the anchoring means.

12. Concrete pipe provided with an anchoring means according to one of the preceding claims.

13. Pipeline comprising a plurality of concrete pipes that are interconnected by means of the system according to one of the claims 1-10.

## Patentansprüche

1. System zum Übertragen einer Zuglast in Axialrichtung zwischen einem ersten Betonrohr (1) und einem zweiten Betonrohr (2), wobei das erste Betonrohr (1) mindestens eine erste Verankerungseinrichtung (4) und wobei das zweite Betonrohr (2) mindestens eine zweite Verankerungseinrichtung (4) aufweist,
wobei das System mindestens eine Kopplungseinrichtung (5) aufweist, um eine erste Verankerungseinrichtung (4) des ersten Betonrohrs (1) und eine entsprechende zweite Verankerungseinrichtung (4) des zweiten Betonrohrs (2) so miteinander zu verbinden, daß zwischen dem ersten Betonrohr (1) und dem zweiten Betonrohr (2) eine Zuglast (L) in Axialrichtung übertragen werden kann,
**dadurch gekennzeichnet, daß**
die Kopplungseinrichtung (5) mindestens ein elastisches Element (51) aufweist, das in dem Lastübertragungspfad (99) zwischen dem ersten (1) und dem zweiten (2) Betonrohr angeordnet ist, wobei das elastische Element (51) in der Lage ist, sich aufgrund eines Biegemoments in der Kopplungseinrichtung zu verformen.

2. System nach Anspruch 1,
wobei mehrere Kopplungseinrichtungen (5) bereitgestellt sind, die entlang des Umfangs des Rohrs voneinander beabstandet angeordnet sind, und/oder
wobei das elastische Element (51) zusammengepreßt wird, wenn eine Zuglast in Axialrichtung an die Betonrohre angelegt wird,
wobei vorzugsweise mindestens ein elastisches Element (51) mit einer Vorspannung versehen ist und wobei der Grad der Vorspannung in jeder einzelnen Kopplungseinrichtung separat anpaßbar ist.

3. System nach einem der vorstehenden Ansprüche, wobei die Verankerungseinrichtung (5) jedes Betonrohrs mehrere Stäbe (11,21) aufweist, wobei sich die Stäbe (11,21) von einer Axialfläche des jeweiligen Betonrohrs aus in eine im wesentlichen axiale Richtung erstrecken, wobei die Axialflächen des ersten (1) und des zweiten (2) Betonrohrs in Gebrauch einander gegenüberliegen, so daß sich jeder Stab (11) des ersten Betonrohrs (1) im wesentlichen längs eines Stabs (21) des zweiten Betonrohrs (2) erstreckt,
und wobei die Verankerungseinrichtung (5) aufweist:
- mehrere Platten (31,41), wobei die Anzahl der Platten (31,41) gleich der Gesamtanzahl von Stäben (11,21) an dem ersten (1) und dem zweiten (2) Betonrohr ist,
wobei jede der Platten (31,41) aufweist:
- ein erstes Loch zur Aufnahme eines zugehörigen Stabs (11,21) eines der Betonrohre (1,2), und
- eine solche Länge, daß sich im montierten Zustand jede Platte (31,41) in eine Richtung, die im wesentlichen senkrecht zur Axialrichtung der Betonrohre (1,2) ist, zumindest teilweise mit einer benachbarten Platte überlappt, die zu einem Stab des anderen Betonrohrs gehört,
- mehrere elastische Elemente (51), wobei jedes der elastischen Elemente geeignet ist, zwischen zwei benachbarten Platten (31,41) eingeklemmt zu sein, wodurch die benachbarten Platten in Axialrichtung der Betonrohre beabstandet werden,
- mehrere Verriegelungselemente (61,62) zum Verriegeln jeder Platte an ihrem zugehörigen Stab.

4. System nach Anspruch 3,
wobei mindestens ein elastisches Element (51) mit einem Loch zur Aufnahme eines Stabs (11,21) versehen ist, und/oder
wobei mindestens ein elastisches Element (51) geeignet ist, um zwischen einer ersten Platte (41) und einer zweiten Platte (31) und zwischen der ersten Platte (41) und einer dritten Platte (32) eingeklemmt zu sein, wobei die zweite Platte (31) und die dritte Platte (32), die der ersten Platte (41) benachbart sind, an unterschiedlichen Seiten der ersten Platte (41) angeordnet sind, und/oder
wobei die Stäbe (11,21) mit Gewindeenden versehen sind und die Verriegelungselemente (61,62) Gewindemutter sind und/oder
wobei die Verriegelungseinrichtungen (61) mit einer sphärischen Fläche (65) versehen sind, wobei die sphärische Fläche in der Lage ist, eine Platte (31) zu greifen, und wobei die Platten (31) mit einer komplementären sphärischen Fläche (35) zur Aufnahme der sphärischen Fläche (65) der Verriegelungseinrichtungen (61) versehen sind, und/oder
wobei die elastischen Elemente (51) Blöcke aus Natur- oder Synthesekautschuk sind, und/oder
wobei mehrere elastische Elemente (51) mit Hilfe mindestens eines flexiblen Gurts miteinander verbunden sind, und/oder
worin mindestens eine Platte (31,41) und/oder mindestens ein Stab (11,21) mit Einrichtungen versehen ist, um eine Drehung der Platte um ihren zugehörigen Stab zu verhindern.

5. System nach einem der Ansprüche 3 oder 4,
wobei mindestens eine Platte (31,41) mit einem zweiten Loch (71,81) zur Aufnahme des Stabs (11,21), der zu der benachbarten Platte gehört, versehen ist, wobei vorzugsweise das zweite Loch (71,81) einen Durchmesser hat, der wesentlich größer ist als der Außendurchmesser eines Stabs (11,21), oder wobei das zweite Loch (71,81) einen Schlitz (82) aufweist, der sich zum Außenrand der Platte (41) erstreckt.

6. System nach einem der Ansprüche 3 bis 5, wobei mindestens ein elastisches Element (51) mit einem zweiten Loch zur Aufnahme des Stabs, der zu der benachbarten Platte gehört, versehen ist, wobei vorzugsweise das zweite Loch einen Durchmesser hat, der wesentlich größer ist als der Außendurchmesser eines Stabs, oder wobei das zweite Loch einen Schlitz aufweist, der sich zum Außenrand des elastischen Elements erstreckt.

7. System nach einem der Ansprüche 1 oder 2,
wobei die Verankerungseinrichtung (4) an jedem Betonrohr (1,2) mindestens ein Eingriffselement (101) aufweist, das in radialer Richtung von dem Betonrohr aus vorspringt,
und wobei die Kopplungseinrichtungen (5) aufweisen:
- mindestens ein erstes elastisches Element (151), das in der Lage ist, ein Eingriffselement (101) des ersten Betonrohrs (1) zu greifen,
- mindestens ein zweites elastisches Element (152), das in der Lage ist, ein Eingriffselement (101) des zweiten Betonrohrs (2) zu greifen,
- mindestens eine Verbindungseinrichtung, um ein erstes und ein zweites nachgiebiges bzw. elastisches Element so miteinander zu verbinden, daß eine Axiallast von dem ersten Betonrohr aus zu dem zweiten Betonrohr übertragen werden kann.

8. System nach Anspruch 7,
wobei mindestens ein Betonrohr (1,2) in dem Beton eingebettete Verstärkungseinrichtungen (3) aufweist und wobei mindestens ein Eingriffselement (4) mit diesen Verstärkungseinrichtungen (3) verbunden ist, und/oder
wobei das Eingriffselement mindestens eines der Betonrohre (1,2) eine zumindest teilweise kreisförmigen Platte ist, die an einer Axialfläche des Betonrohrs angebracht ist.

9. System nach Anspruch 7 oder 8,
wobei die Verbindungseinrichtung eine Klammer ist, die ein erstes Klammerelement (125) zum Eingreifen eines Eingriffselementes des ersten Betonrohrs (1), ein zweites Klammerelement (126) zum Eingreifen eines Eingriffselementes des zweiten Betonrohrs (2) und ein Verbindungsstück (127) zum Verbinden des ersten und des zweiten Klammerelements (125,126) aufweist,
wobei vorzugsweise das erste (125) und das zweite (126) Klammerelement mit Zähnen (128) versehen sind, um das erste Klammerelement und das zweite Klammerelement relativ zueinander zu verriegeln.

10. System nach einem der Ansprüche 7 bis 9,
wobei mehrere Kopplungseinrichtungen bereitgestellt sind, die entlang des Umfangs der Rohre verteilt sind,
wobei vorzugsweise mehrere Kopplungseinrichtungen mit Hilfe mindestens eines flexiblen Gurts (130) miteinander verbunden sind.

11. System nach einem der vorstehenden Ansprüche,
wobei mindestens ein Betonrohr Dichtungseinrichtungen aufweist, die an der Verankerungseinrichtung angebracht sind.

12. Mit einer Verankerungseinrichtung nach einem der vorstehenden Ansprüche bereitgestelltes Betonrohr.

13. Rohrleitung mit mehreren Betonrohren, die mit Hilfe des Systems nach einem der Ansprüche 1 bis 10 miteinander verbunden sind.

## Revendications

1. Système pour transférer une charge de traction dans la direction axiale entre un premier tuyau en béton (1) et un deuxième tuyau en béton (2), dans lequel le premier tuyau en béton (1) comprend au moins un premier moyen d'ancrage (4), et
dans lequel le deuxième tuyau en béton (2) comprend au moins un deuxième moyen d'ancrage (4),
le système comprenant au moins un moyen d'accouplement (5) pour relier l'un à l'autre un premier moyen d'ancrage (4) du premier tuyau en béton (1) et un deuxième moyen d'ancrage (4) associé du deuxième tuyau en béton (2) de manière à ce qu'une charge de traction (L) dans la direction axiale puisse être transférée entre le premier tuyau en béton (1) et le deuxième tuyau en béton (2),
**caractérisé en ce que**,
les moyens d'accouplement (5) comprennent au moins un élément élastique (51) qui est agencé dans le trajet de transfert de charge (99) entre les premier (1) et deuxième (2) tuyaux en béton, lequel élément élastique (51) est adapté pour se déformer du fait d'un moment de flexion dans les moyens d'accouplement.

2. Système selon la revendication 1,
dans lequel une pluralité de moyens d'accouplement (5) sont prévus, lesquels sont espacés sur la circonférence du tuyau, et/ou
dans lequel l'élément élastique (51) est comprimé lorsqu'une charge de traction dans la direction axiale est appliquée aux tuyaux en béton,
dans lequel, de préférence, au moins un élément élastique (51) reçoit une précontrainte, et dans lequel le niveau de précontrainte est adaptable séparément dans chaque moyen d'accouplement individuel.

3. Système selon l'une des revendications précédentes,
dans lequel les moyens d'ancrage (5) de chaque tuyau en béton comprennent une pluralité de tiges (11, 21), lesquelles tiges (11, 21) s'étendent d'une face axiale du tuyau en béton respectif dans une direction sensiblement axiale, lesquelles faces axiales des premier (1) et deuxième (2) tuyaux en béton se font face en utilisation de manière à ce que chaque tige (11) du premier tuyau en béton (1) s'étend sensiblement le long d'une tige (21) du deuxième tuyau en béton (2),
et dans lequel les moyens d'accouplement (5) comprennent :
- une pluralité de plaques (31, 41), le nombre de plaques (31, 41) étant égal au nombre total de tiges (11, 21) sur les premier (1) et deuxième (2) tuyaux en béton ensemble,
chacune des plaques (31, 41) ayant :
- un premier trou pour recevoir une tige (11, 21) associée de l'un des tuyaux en béton (1, 2), et
- une longueur telle que, lorsqu'elle est montée, chaque plaque (31, 41) recouvre au moins partiellement dans une direction sensiblement perpendiculaire à la direction axiale des tuyaux (1, 2) une plaque voisine qui est associée à une tige de l'autre tuyau en béton,
- une pluralité d'éléments élastiques (51), chacun des éléments élastiques étant adapté pour être serré entre deux plaques (31, 41) adjacentes, espaçant de ce fait les plaques adjacentes dans la direction axiale des tuyaux en béton,
- une pluralité d'éléments de verrouillage (61, 62), pour verrouiller chaque plaque avec sa tige associée.

4. Système selon la revendication 3,
dans lequel au moins un élément élastique (51) est pourvu d'un trou pour recevoir une tige (11, 21), et/ou
dans lequel au moins un élément élastique (51) est adapté pour être serré entre une première plaque (41) et une deuxième plaque (31), et entre la première plaque (41) et une troisième plaque (32), la deuxième plaque (31) et la troisième plaque (32) étant voisines de la première plaque (41) de différents côtés de la première plaque (41), et/ou
dans lequel les tiges (11, 21) sont pourvues d'extrémités filetées et les éléments de verrouillage (61, 62) sont des écrous, et/ou
dans lequel les moyens de verrouillage (61) sont pourvus d'une face sphérique (65), laquelle face sphérique est adaptée pour venir en prise avec une plaque (31), et dans lequel les plaques (31) sont pourvues d'une face sphérique (35) complémentaire pour recevoir la face sphérique (65) des moyens de verrouillage (61), et/ou
dans lequel les éléments élastiques (51) sont des blocs de caoutchouc naturel ou artificiel, et/ou
dans lequel une pluralité d'éléments élastiques (51) sont reliés les uns aux autres au moyen d'au moins une sangle flexible, et/ou
dans lequel au moins une plaque (31, 41) et/ou au moins une tige (11, 21) sont pourvues de moyens pour empêcher une rotation de la plaque autour de sa tige associée.

5. Système selon l'une des revendications 3 et 4,
dans lequel au moins une plaque (31, 41) est pourvue d'un deuxième trou (71, 81) pour recevoir la tige (11, 21) associée à la plaque voisine,
dans lequel, de préférence, le deuxième trou (71, 81) a un diamètre qui est sensiblement supérieur au diamètre externe d'une tige (11, 21), ou
dans lequel le deuxième trou (71, 81) comprend une fente (82) qui s'étend vers le rebord extérieur de la plaque (41).

6. Système selon l'une des revendications 3 à 5,
dans lequel au moins un élément élastique (51) est pourvu d'un deuxième trou pour recevoir la tige associée à la plaque voisine,
dans lequel, de préférence, le deuxième trou a un diamètre qui est sensiblement supérieur au diamètre externe d'une tige, ou
dans lequel le deuxième trou comprend une fente qui s'étend vers le rebord externe de l'élément élastique.

7. Système selon l'une des revendications 1 et 2,
dans lequel les moyens d'ancrage (4) sur chaque tuyau en béton (1, 2) comprennent au moins un élément de mise en prise (101) qui fait saillie du tuyau en béton dans la direction radiale,
et dans lequel les moyens d'accouplement (5) comprennent :
- au moins un premier élément élastique (151) qui est adapté pour venir en prise avec un élément de mise en prise (101) du premier tuyau en béton (1),
- au moins un deuxième élément élastique (152) qui est adapté pour venir en prise avec un élément de mise en prise (101) du deuxième tuyau en béton (2),
- au moins un moyen de liaison pour relier des premier et deuxième éléments élastiques l'un à l'autre de manière à ce qu'une charge axiale puisse être transférée du premier tuyau en béton au deuxième tuyau en béton.

8. Système selon la revendication 7,
dans lequel au moins un tuyau en béton (1, 2) comprend des moyens de renforcement (3) intégrés dans le béton, et dans lequel au moins un moyen de mise en prise (4) est relié à ces moyens de renforcement (3), et/ou
dans lequel l'élément de mise en prise d'au moins l'un des tuyaux en béton (1, 2) est une plaque au moins partiellement circulaire qui est fixée à une face axiale dudit tuyau en béton.

9. Système selon la revendication 7 ou 8,
dans lequel les moyens de liaison sont une pince comprenant un premier élément de serrage (125) pour venir en prise avec un élément de mise en prise du premier tuyau en béton (1), un deuxième élément de serrage (126) pour venir en prise avec un élément de mise en prise du deuxième tuyau en béton (2) et un raccord (127) pour joindre les premier et deuxième éléments de serrage (125, 126),
dans lequel, de préférence, les premier (125) et deuxième (126) éléments de serrage sont pourvus de dents (128) pour verrouiller le premier élément de serrage et le deuxième élément de serrage l'un par rapport à l'autre.

10. Système selon l'une des revendications 7 à 9,
dans lequel une pluralité de moyens d'accouplement sont prévus, lesquels sont répartis sur la circonférence des tuyaux,
dans lequel, de préférence, une pluralité de moyens d'accouplement sont reliés les uns aux autres au moyen d'au moins une sangle flexible (130).

11. Système selon l'une des revendications précédentes,
dans lequel au moins un tuyau en béton comprend des moyens d'étanchéité qui sont fixés aux moyens d'ancrage.

12. Tuyau en béton pourvu de moyens d'ancrage selon l'une des revendications précédentes.

13. Pipeline comprenant une pluralité de tuyaux en béton qui sont reliés les uns aux autres au moyen du système selon l'une des revendications 1 à 10.
